# EUROPÄISCHE PATENTSCHRIFT

(11) **EP 0 332 979 B1**
(45) Veröffentlichungstag und Bekanntmachung des Hinweises auf die Patenterteilung: **10.11.1993**
(21) Anmeldenummer: 89103943.0
(22) Anmeldetag: 07.03.1989
(51) Int. Cl.: H02K 7/09, F16C 39/06

(54) **Magnetische Lagerung mit Permanentmagneten zur Aufnahme der radialen Lagerkräfte**
Magnetic support with permanent magnets for absorption of the radial bearing stresses
Support magnétique avec aimants permanents pour absorber des contraintes radiales de paliers

(30) Priorität: 12.03.1988 DE 3808331
(43) Veröffentlichungstag der Anmeldung: 20.09.1989
(73) Patentinhaber: FORSCHUNGSZENTRUM JÜLICH GMBH, 52425 Jülich (DE)
(72) Erfinder: Fremerey, Johan K., Dr., D-5300 Bonn 1 (DE)

(56) Entgegenhaltungen:
- EP-A- 0 155 624
- WO-A-79/00987
- DE-U- 1 773 083

## Beschreibung

Die Erfindung bezieht sich auf eine magnetische Lagerung für einen Rotor mit Lagern unter Verwendung von Permanentmagneten zur Aufnahme der radialen Lagerkräfte, wobei ein Stabilisierungslager durch Zusammenwirken von am Stator angebrachten elektrischen Spulen mit am Rotor befestigten magnetisierbaren Teilen den Rotor in einer berührungslosen Lage gegenüber den Stator hält.

Magnetlager mit Merkmalen der vorgenannten Art sind aus US-PS 3,929, 390 und Journal of Spacecraft, Band 17, No. 2, 1980, S. 93 - 98, bekannt. Bei diesen Magnetlagern sind an beiden Rotorenden ringförmig ausgebildete Permanentmagnete angebracht, die mit an Stator befestigten Ringmagneten in der Weise zusammenwirken, daß auf den Rotor bei radialer Auslenkung eine radiale Zentrierkraft ausgeübt wird. Gleichzeitig entsteht in axialer Richtung eine Kraftinstabilität durch die Permanentmagnete. Diese Kraftinstabilität wird durch eine in der Mitte des Rotors angebrachte, axial wirkende elektromagnetische Ablenkzelle ausgeglichen, die mit elektrischen Steuerströmen entsprechend der jeweiligen axialen Abweichung des Rotors von seiner axialen Sollposition beaufschlagt wird. Die Abweichung wird mittels eines berührungslosen Sensorsystems erfaßt, welches den die Ablenkzelle durchfließenden Steuerstrom über einen entsprechenden elektronischen Verstärker regelt. Auf beiden Seiten der Ablenkzelle sind in unmittelbarer Nähe der an den Rotorenden angebrachten Permanentmagnete mit dem Stator fest verbundene Kupferscheiben angebracht, die mit am Rotor befestigten Permanentmagneten in der Weise zusammenwirken, daß radiale Vibrationen des Rotors gedämpft werden (Wirbelstromdämpfung). Dagegen werden in einer aus DE-A 34 09 047 bekannten magnetischen Lagerung für diejenigen permanentmagnetischen Lagerelemente, die die radiale Zentrierung des Rotors bewirken, die Positionen beidseitig des Rotorschwerpunkts im wesentlichen beibehalten, während die Ablenkzelle als Stabilisierungslager mit geringer Steifigkeit an das Ende der Rotorwelle außerhalb der permanentmagnetischen Rotorlager gelegt ist. Die Ablenkzelle enthält die elektrischen Spulen für die axiale Rotorstabilisierung und mehrere am Rotor befestigte Permanentmagnete, die mit einer am Stator angebrachten Kupferplatte eine Wirbelstromdämpfung für radiale Vibrationen des Rotors bewirken.

Nachteil der vorbeschriebenen Magnetlagerungen ist, daß während des Betriebes solcher Lagerungen auftretende axiale Deformationen des Rotors und in besonderem Maße des den Rotor einschließenden Gehäuses, an welchem die Statormagnete befestigt sind, eine beträchtliche Dejustierung des Lagersystems verursachen können, so daß unter ungünstigen Bedingungen der Spielraum in der magnetischen Ablenkzelle überschritten wird. Die genannten Deformationen treten insbesondere infolge von Druckbelastungen des Gehäuses auf, wenn dieses beispielsweise evakuiert wird, oder infolge von thermischen Belastungen, die in erster Linie vom Antriebsmotor für den Rotor verursacht werden. Andererseits können antriebsbedingte oder durch Gasreibung bei hohen Rotationsgeschwindigkeiten verursachte Erwärmungen des Rotors zu einer Längenänderung des Rotors und damit zu einer Dejustierung der magnetischen Lagerungen führen.

Aufgabe der Erfindung ist es, eine magnetische Lagerung zu schaffen, deren Justierung weitestgehend unempfindlich gegen Deformationen ist, ohne daß der Lageraufbau aufwendig wird.

Diese Aufgabe der Erfindung wird bei einem Magnetlager der eingangs bezeichneten Art durch die im Patentanspruch 1 angegebenen Merkmale gelöst. Das erfindungsgemäße Lager weist nur noch zwei in sich geschlossene Lagerkomponenten auf, wobei die statische Justierung durch ein Schwerpunktlager mit vergleichsweise hoher magnetischer Steifigkeit bestimmt wird, während ein Stabilisierungslager mit im Vergleich zum Schwerpunktlager geringerer Steifigkeit im wesentlichen die berührungslose Stabilisierung des Systems übernimmt. Das Schwerpunktlager trägt den weitaus größten Teil des Rotorgewichts und ist deshalb im Bereich des Rotorschwerpunkts angeordnet. Der Schwerpunkt des Rotors befindet sich innerhalb des Schwerpunktlagers. Diese Aufteilung der tragenden und stabilisierenden Funktion auf zwei unterschiedliche magnetische Lager ist in seiner Wirkungsweise vergleichbar mit der Aufteilung der tragenden und stabiliserenden Funktionen von Tragfläche und Leitwerk bei Flugzeugen.

Dadurch, daß das Schwerpunktlager die Rotormasse trägt, wird auch die Gleichgewichtslage des Rotors in axialer Richtung überwiegend vom Schwerpunktlager bestimmt, während deformationsbedingte Verschiebungen des Stabilisierungslagers wegen dessen geringer Steifigkeit nur einen unbedeutenden Einfluß auf das Rotorgleichgewicht haben. Bevorzugt beträgt das Verhältnis der Lagersteifigkeit zwischen Schwerpunktlager und Stabilisierungslager mindestens 10 : 1.

Die Schwerpunktlagerung des Rotors macht auch fliegende Lagerungen von Maschinenteilen möglich. Eine solche Lagerung bietet neben der für die Handhabung des Systems günstigen Montagefreiheit an der lagerfreien Seite den Vorteil, daß alle Komponenten der magnetischen Lagerung in einem kurzen und deshalb formstabilen Gehäuse untergebracht werden können, im Gegensatz zu den bekannten Lagerungen, bei denen die Lagerkomponenten über entsprechend große Gehäuseteile verbunden werden müssen, deren Deformationen sich, wie vorbeschrieben, auf die Magnetlagerung negativ auswirken.

Mit dem Ziel, eine hohe Lagersteifigkeit im Schwerpunktlager zu erreichen, besteht das Schwerpunktlager nach Patentanspruch 2 aus einem Satz von Magnetringen aus hartmagnetischem Material mit gleichgerichteter axialer Magnenetisierung. Rotor- und Statormagnetringe sind abwechselnd und bezüglich ihrer Magnetisierungsrichtung hintereinander angeordnet, wobei sich die im wesentlichen ebenen Stirnflächen von Rotor- und Statormagnetringen in engem axialen Abstand gegenüberstehen.

Die Anordnung der axial magnetisierten Ringe in Hintereinanderschaltung, also in axial anziehender Anordnung, hat gegenüber den in bekannten Magnetlagern vielfach angewandten abstoßenden Magnetanordnungen den Vorteil, daß die Magnetringe bei hoher innerer magnetischer Flußdichte betrieben werden, so daß die lokalen Schwankungen in der Koerzitivfeldstärke des magnetischen Materials die Gleichmäßigkeit der Drehbewegungen des Rotors nur wenig beeinträchtigen. Das Vermeiden von Eisenpolschuhen mit Flußkonzentration an den Luftspalten, die bei anderen Magnetlagern eingesetzt werden, ermöglicht ein günstiges Verhältnis der radialen Zentriersteifigkeit des Lagers zu dessen negativer Axialsteifigkeit und umgeht gleichzeitig die Verwendung der herstellungstechnisch ungünstigen und somit kostenaufwendigen Ringmagnete mit radialer Magnetisierung.

Zur weiteren Erhöhung der Steifigkeit des Schwerpunktlagers ist gemäß Patentanspruch 3 mindestens ein weiterer Satz von Magnetringen mit dem ersten Satz entgegengesetzter axialer Magnetisierung angeordnet, wobei Stirnflächen der Rotor- bzw. Statormagnetringe des einen Satzes mit Stirnflächen der Rotor- bzw. Statormagnetringe des anderen Satzes in einer Ebene liegen. Aufgrund der magnetostatischen Gegebenheiten läßt sich durch die Anordnung von konzentrischen Polflächen entgegengesetzter Polarität an den Lagerspalten die Steifigkeit eines Lagers im Verhältnis zum eingesetzten Magnetmaterialvolumen überproportional steigern.

Die Ausbildung von konzentrischen, in einer Ebene liegenden Polflächen kann in vorteilhafter Weise auch durch lokal unterschiedliche Magnetisierung einer aus einem Stück gefertigten Scheibe erreicht werden, Patentanspruch 4. Mit Scheiben dieser Art lassen sich die mechanischen Bearbeitungskosten senken und die Montagekosten der Schwerpunktlager verringern.

Für Anwendungsfälle, in denen die Magnetlager mit chemisch aggressiven Gasen oder Flüssigkeiten in Berührung kommen, insbesondere bei Verwendung der Magnetlager in Pumpen oder Kompressoren, werden die aus hartmagnetischem Material gefertigten Magnetringe bzw. Scheiben bevorzugt mit einer Beschichtung versehen, die das hartmagnetische Material gegen die Einwirkung solcher Medien schützt, Patentanspruch 5.

Im Falle der Verwendung von Seltenerde-Kobalt-Werkstoffen für die Magnetringe bzw. Magnetscheiben und einem Betrieb in wasserstoffhaltigen Medien wird gemäß Patentanspruch 6 die Beschichtung vorteilhaft aus Schutzscheiben und/oder Schutzblechen gefertigt, die mittels Schrumpfverbindungen oder durch Kleben, Löten oder Schweißen auf den Magnetringen bzw. Magnetscheiben befestigt werden.

In Anwendungsfällen, in welchen lediglich eine Feuchtigkeitssperre zur Verhinderung von Korrosion erforderlich ist, werden die Magnetringe oder -scheiben nach Patentanspruch 7 vorzugsweise kostengünstig durch Aufbringen einer flüssigen Phase beschichtet, wobei insbesondere eine Kunststoffimprägnierung sowie chemisch bzw. galvanisch aufgebrachte Metallschichten gebildet werden.

Zum Vermeidung einer mechanischen Überbeanspruchung der Magnetringe aus hartmagnetischem Material, die aufgrund von Zentrifugalkräften bei hohen Rotationsgeschwindigkeiten auftreten können, werden diese Magnetringe gemäß Patentanspruch 8 in vorteilhafter Weise in einem Material hoher Zugfestigkeit eingefaßt. Als solches eignet sich vorzugsweise ein Faserverbundwerkstoff.

Da das Schwerpunktlager wegen der ausschließlichen Verwendung von Permanentmagneten zur Krafterzeugung in seiner zentrierenden Funktion nicht ausfallen kann, und weil diesem Schwerpunktlager im Vergleich zum Stabilisierungslager nur geringe dynamische Stabilisierungsaufgaben zugeordnet sind, kann am Schwerpunktlager auf ein mechanisches Notlauflager hoher Qualität zugunsten einer einfachen, kostengünstigen und bruchsicheren Anlaufbuchse verzichtet werden, Patentanspruch 9. Die zentrierende Wirkung des Schwerpunktlagers reicht unter ansonsten normalen Betriebsbedingungen aus, um den Rotor nach kurzzeitigem radialen Anlaufen infolge einer radialen Stoßbeanspruchung des Systems sicher einzufangen.

In vorteilhafter und kostengünstiger Weise wird die Anlaufbuchse gemäß Patentanspruch 10 mit einem temperaturbeständigen Kunststoff mit guten Gleiteigenschaften ausgekleidet. Vorzugsweise werden PTFE (Polytetrafluoräthylen) oder Polyimid mit Gleitstoffeinlagerungen verwendet.

In weiterer Ausgestaltung der Erfindung ist gemäß Patentanspruch 11 für die Abtastung der axialen Rotorposition ein Sensor vorgesehen, der im wesentlichen aus zwei Spulen annähernd gleicher Impedanz besteht. Eine der Spulen ist mit axialem Abstand gegenüber einem Markierungsteil angebracht, das an einem der axialen Rotorenden befestigt ist und zur Abtastung der Rotorlager dient. Das Markierungsteil besteht aus einem Material mit hoher elektrischer und/oder magnetischer Leitfähigkeit. Die Begrenzungsflächen von Spule und Markierungsteil sind im wesentlichen eben und senkrecht in Bezug auf die Rotorachse orientiert. Die zweite Spule des Sensors befindet sich gegenüber einem am Stator angebrachten Markierungsteil, das aus einem mit dem Material des Markierungsteils am Rotor vergleichbaren Material besteht. Der Aufbau des Sensors aus zwei weitgehend identischen Spulen ist insbesondere in Verbindung mit einem Differentialtransformator im Eingangsbereich des Regelverstärkers von Vorteil, weil temperaturbedingte Veränderungen der Spulenimpedanzen neutralisiert werden und infolgedessen das Sensorsystem keine temperaturbedingte Dejustierung der magnetischen Lagerung bewirkt.

In weiterer Ausgestaltung der Erfindung wird zwischen dem Schwerpunktlager und dem Stabilisierungslager ein Antriebsmotor 8 untergebracht, Patentanspruch 12. Der an der Rotorwelle befestigte Läufer des Antriebsmotors besteht zu wesentlichen Teilen aus permanentmagnetischem Material geringer Permeabilität und ist in radialer Richtung magnetisiert. In Verbindung mit der erfindungsgemäßen Lagerung bildet ein Motor mit permanentmagnetischem Läufer bei geringer Permeabilität gegenüber den gebräuchlichen Kurzschlußläufermotoren mit hochpermeabler Eisenfüllung den Vorteil einer vergleichsweise geringen negativen radialen Steifigkeit. Diese tritt bei konventionellen, harten Wälzlagern nicht störend in Erscheinung, während sie die Gesamtsteifigkeit einer magnetischen Lagerung, insbesondere einer solchen ohne radiale elektromagnetische Regelung, in unzulässiger Weise beeinträchtigen kann.

Nach Patentanspruch 13 ist für den Antriebsmotor zum Antrieb des permanentmagnetischen Läufers ein Stator vorgesehen, der eine bei Drehstrommotoren übliche Bewicklung aufweist und aus einem Drehstromgenerator bzw. Drehstromwandler gespeist wird. Eine solche Motorausbildung hebt sich in vorteilhafter Weise von der eines kollektorlosen Gleichstrommotors ab, weil sie einen höheren Motorwirkungsgrad ermöglicht. Dieser Vorteil kommt in besonderem Maße in Verbindung mit der berührungslosen magnetischen Lagerung zur Wirkung, weil Wärmeverluste am Motor sich nicht auf den Rotor übertragen, aus dem sie wegen der guten Wärmeisolierung des Rotors schlecht abgeführt werden können.

In weiterer Ausgestaltung der Erfindung ist am Rotor ein axial wirkendes Anlauflager angebracht, das aus zwei gegeneinandergestellten und auf der Rotorwelle befestigten Schulter- bzw. Spindel-Kugellagern sowie aus einer mit dem Gehäuse verbundenen Kapsel besteht, Patentanspruch 14.

Nach Patentanspruch 15 ist die Verwendung der erfindungsgemäßen Lagerung in Verbindung mit einer Schwungscheibe aus hochfestem Material vorgesehen, insbesondere aus einem für höchste Drehgeschwindigkeiten ausgelegten Faserverbundmaterial. Systeme dieser Art sind in bekannter Weise geeignet als Energiespeicher für unterbrechungslose Stromversorgungen und für Chopper mit hoher Zeitauflösung.

Die erfindungsgemäße Rotorlagerung wird vor allem für Rotoren einer axial und/oder radial verdichtenden Gasturbine, insbesondere einer Turbomolekularpumpe zur Erzeugung von Hochvakuum eingesetzt, Patentanspruch 16. Bei dieser Anwendung kommt der erfindungsgemäßen Lagerung aufgrund ihres einfachen Aufbaues und der hieraus folgenden hohen Betriebssicherheit eine besondere Bedeutung für den Einsatz für die Vakuumprozeßtechnik zu.

Eine weitere Verwendung ist für Spinnturbinen gegeben, Patentanspruch 17. Für Spinnturbinen ist insbesondere die kostengünstige Herstellbarkeit des Magnetlagers aufgrund seines einfachen Aufbaus von Vorteil.

Nachfolgend wird die Erfindung anhand von Ausführungsbeispielen näher erläutert. Die Zeichnung zeigt im einzelnen:
- Figur 1: Magnetische Lagerung, Grundaufbau;
- Figur 2a: Schwerpunktlager mit in axialer Richtung magnetisiertem Magnetringsatz;
- Figur 2b: Schwerpunktlager mit zwei entgegengesetzt magnetisierten Magnetringsätzen;
- Figur 2c: Schwerpunktlager mit Magnetscheiben, die zwei konzentrisch angeordnete, ringförmige Zonen entgegengesetzter axialer Magnetisierung aufweisen;
- Figur 3: Stabilisierungslager;
- Figur 4: radiale Anlaufbuchse;
- Figur 5: Axialsensor;
- Figur 6: Antriebsmotor;
- Figur 7: Anlauflager.

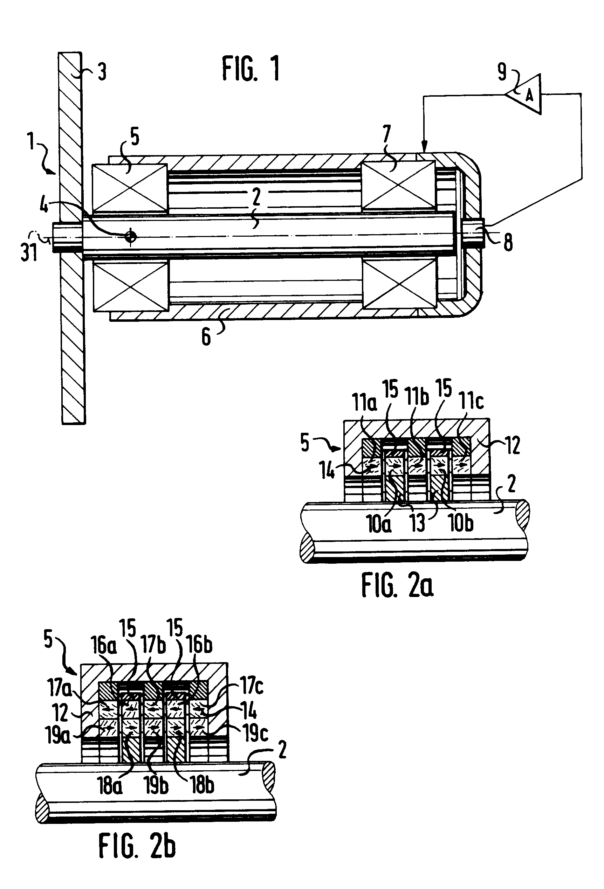

Figur 1 zeigt schematisch den Grundaufbau der erfindungsgemäßen magnetischen Lagerung. Ein Rotor 1, bestehend aus Welle 2 und an der Welle befestigtem Maschinenteil 3 (beispielsweise ein Schwungrad), befindet sich mit seinem Schwerpunkt 4 innerhalb eines Schwerpunktlagers 5. Das Schwerpunktlager 5 ist an einem Lagergehäuse 6 befestigt, das auch ein Stabilisierungslager 7 trägt. Am Lagergehäuse 6 ist für die Abtastung der axialen Rotorposition ein Sensor 8 angebracht, der mit dem Eingang eines Regelverstärkers 9 verbunden ist. Der Ausgangsstrom des Regelverstärkers 9 beaufschlagt die im Stabilisierungslager 7 befindlichen Ablenkspulen in der Weise, daß bei axialen Abweichungen des Rotors aus seiner vorgegebenen berührungslosen Soll-Position eine der Abweichung entgegenwirkende Rückstellkraft auf den Rotor ausgeübt wird. Der Regelverstärker 9 wird dabei vorzugsweise so ausgelegt, daß der Rotor 1 eine axiale Position einnimmt, in welcher alle im Schwerpunktlager 5 wirkenden statischen Axialkräfte ausgeglichen sind, so daß unter diesen Bedingungen der Ausgangsstrom des Regelverstärkers zu Null wird. Dies trifft bei ausreichender Dimensionierung des Schwerpunktlagers 5 und des Stabilisierungslagers 7 insbesondere auch für den Fall einer vertikalen Achslage des Gesamtsystems zu, in welcher außer den vom Schwerpunktlager 5 und vom Stabilisierungslager 7 erzeugten magnetostatischen Axialkräften zusätzlich die Gewichtskraft des Rotors 1 aufgefangen werden muß. In diesem Falle sind die nach oben gerichteten Magnetkräfte um die Gewichtskraft größer zu bemessen als die nach unten gerichteten Magnetkräfte. Das Maschinenteil 3 ist an der Welle 2 derart anzukoppeln, daß der Schwerpunkt des Rotors 1 möglichst mit der Mitte des Schwerpunktlagers 5 zusammenfällt.

Figur 2a zeigt einen Halbschnitt durch ein Ausführungsbeispiel des Schwerpunktlagers 5. Das Schwerpunktlager weist Rotormagnetringe 10 und Statormagnetringe 11 auf, die sich in ihren Abmessungen weitgehend gleichen und innerhalb eines vorzugsweise aus Eisen oder einem anderen magnetisch leitenden Werkstoff gefertigten Schwerpunktlagergehäuse 12 in der Weise hintereinander angeordnet sind, daß sich Rotormagnetringe 10a, 10b zwischen Statormagnetringen 11a, 11b, 11c befinden. Die Rotormagnetringe 10a, 10b sind mittels einer Stützscheibe 13 an der Welle 2 befestigt. Die Stirnseiten der Rotor- und Statormagnetringe stehen sich in engem axialem Abstand gegenüber.

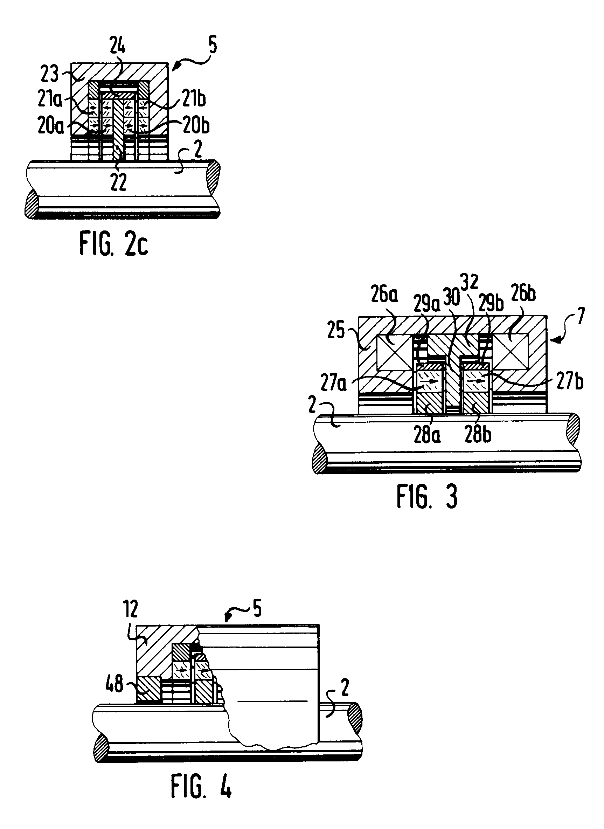

Alle Rotor- und Statormagnetringe 10, 11 des Schwerpunktlagers 5 bestehen aus hartmagnetischem Material und sind in achsparalleler Richtung magnetisiert. Die Rotor- und Statormagnetringe sind an der Welle 2 bzw. im Schwerpunktlagergehäuse 12 derart befestigt, daß sie in Bezug auf ihre Magnetisierungsrichtung 14, die in Figuren 2a bis 2c mit Pfeilen angedeutet ist, hintereinander angeordnet sind. An den Lagerspalten zwischen Stator- und Rotormagnetringen stehen sich somit entgegengesetzte Magnetpole gegenüber, zwischen denen sich ein starkes Magnetfeld mit anziehender Wirkung aufbaut. Die Anziehungskräfte nehmen mit enger werdenden Lagerspalten stark zu. Bei Mittelstellung der Rotormagnetringe zwischen den Statormagnetringen ergibt sich ein Kräftegleichgewicht, das jedoch äußerst instabil ist und nur durch entsprechende Auslegung des Stabilisierungslagers 7 (Fig. 3) aufrechterhalten werden kann.

Das zwischen den Stirnflächen der Rotor- und Statormagnetringe herrschende Magnetfeld bewirkt eine hohe radiale Rückstellkraft zwischen den Magnetringen. Die Magnetringe müssen mindestens so bemessen sein, daß das Rotorgewicht aufgefangen werden kann. In axialer Richtung können vergleichbare Rückstellkräfte durch eine axiale Verschiebung des Rotors erzeugt werden, so daß insbesondere bei vertikaler Achslage die aus den veränderten Lagerspaltweiten resultierenden magnetischen Differenzkräfte den Gewichtsausgleich bewirken.

Die Rotormagnetringe 10a, 10b sind im Ausführungsbeispiel in Schutzringen 15 aus einem Material mit hoher Zugfestigkeit eingepaßt, damit sie bei hohen Drehgeschwindigkeiten nicht durch Zentrifugalkräfte zerrissen werden. Als Material für die Panzerringe 15 eignen sich neben hochfesten Edelstahl- oder Titanlegierungen insbesondere faserverstärkte Kunststoffe wie glas-, kohlenstoff- oder auch borfaserverstärkte Kunststoffe.

Fig. 2b zeigt eine weitere Variante des Schwerpunktlagers 5 mit wiederum konzentrisch angeordneten Rotor- und Statormagnetringen, wobei ein in radialer Richtung außen liegender Satz von Rotormagnetringen 16a, 16b und Statormagnetringen 17a, 17b, 17c und ein innen liegender Satz von Rotormagnetringen 18a, 18b und Statormagnetringen 19a, 19b, 19c benachbart angeordnet sind. Der außen liegende Satz der Magnetringe 16, 17 und der innen liegende Satz der Magnetringe 18, 19 sind jeweils in entgegengesetzter Richtung axial magnetisiert. Die Stirnflächen aller Magnetringe liegen bei den Rotor- bzw. Statormagnetringen jeweils in einer Ebene.

Bezogen auf das eingesetzte Magnetmaterialvolumen bietet eine solche Anordnung von Magnetringen eine um 50 % höhere Lagersteifigkeit gegenüber derjenigen Lageranordnung, wie sie im Ausführungsbeispiel nach Fig. 2a beschriebenen ist. Ohne wesentliche Vergrößerung des Außendurchmessers des Schwerpunktlagergehäuses 12 läßt sich somit bei unveränderter Baulänge ein Vielfaches an kraftreserve im Schwerpunktlager 5 installieren.

Eine noch weitergehende Ausnutzung des eingesetzten Magnetmaterials bietet die in Fig. 2c wiedergegebene Variante des Schwerpunktlagers 5. Bei diesem Schwerpunktlager sind anstelle der in Fig. 2b wiedergegebenen einander angepaßten Rotor- und Statormagnetringe Scheiben 20a, 20b, 21a, 21b aus hartmagnetischem Material eingesetzt, die jeweils durch Pfeile markierte konzentrische ringförmige Zonen entgegengesetzter Magnetisierung aufweisen und derart aufeinander abgestimmt ausgebildet und eingesetzt sind, daß die permanentmagnetischen Zonen der Scheiben - analog zur Lageranordnung nach Fig. 2b - im äußeren und inneren Bereich in entgegengesetzter Richtung magnetisiert sind. Bei dieser Magnetlagerausführung sind vorzugsweise alle Scheiben auf Eisenrückschlüssen 22, 23 montiert, wodurch die Wirkung der permanentmagnetischen Zonen weiter gesteigert werden kann. Im Ausführungsbeispiel nach Fig. 2c ist ein alle Rotormagnetringe in ihrer gesamten axialen Länge einfassender Schutzring 24 aus unmagnetischem Material hoher Zugfestigkeit vorgesehen.

Fig. 3 zeigt den Aufbau des Stabilisierungslagers 7. Im Gehäuse 25 des Stabilisierungslagers 7 sind zwei elektrische Spulen 26a, 26b eingelassen, die mit zwei an der Welle 2 befestigten Ringmagneten 27a, 27b aus permanentmagnetischem Material in der Weise zusammenwirken, daß auf den Rotor 1 bei axialer Mittelstellung der Ringmagnete im Gehäuse 25 eine Axialkraft übertragen wird, deren Richtung und Betrag eindeutig und linear der Richtung und dem Betrag des die Spulen durchfließenden Stroms zugeordnet sind. Der Umlaufsinn des Stroms in den Spulen 26a, 26b ist dabei jeweils entgegengesetzt gerichtet.

Die Ringmagnete 27a, 27b des Stabilisierungslagers 7 sind auf Stützscheiben 28a, 28b montiert und in Schutzringen 29a, 29b aus einem unmag-Material hoher Zugfestigkeit eingefaßt. Zwischen die Ringmagnete 27a, 27b ragt eine mit dem Stator fest verbundene Scheibe 30 aus elektrisch gut leitendem Material, vorzugsweise aus Kupfer, hinein. In der Scheibe 30 werden bei radialen Vibrationen des Rotors 1 durch die Ringmagnete 27a, 27b elektrische Wirbelströme induziert. Die in der Vibrationsbewegung des Rotors 1 enthaltene mechanische Energie wird dabei induktiv auf die Scheibe 30 übertragen und in Wärme umgesetzt. Auf diese Weise werden die Vibrationen des Rotors wirksam gedämpft.

Durch die Drehbewegung des Rotors 1 um seine Rotorachse 31 werden nur vernachlässigbar kleine Wirbelströme in der Scheibe 30 erzeugt, weil die magnetische Durchflutung der Scheibe sich bei dieser Bewegung nicht verändert. Die Scheibe 30 weist außerhalb des von den Ringmagneten 27a, 27b gebildeten Spaltes einen Kragen 32 auf, der den äußeren Kurzschluß für die Wirbelströme verbessert, so daß die Vibrationsdämpfung effektiver wird.

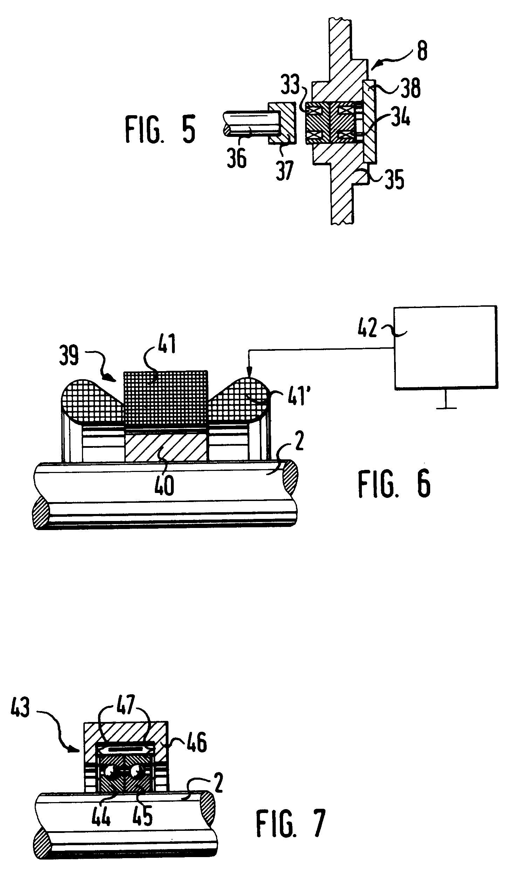

Fig. 5 zeigt einen Schnitt durch den Sensor 8, der zur Erfassung der axialen Rotorposition dient. Zwei Sensorspulen 33, 34 mit im wesentlichen gleichen Abmessungen und Windungszahlen sind fest am Sensorgehäuse 35 montiert. In engem axialen Abstand vor der Stirnfläche der Sensorspule 33 befindet sich am Wellenende 36 ein Markierungsteil 37 aus elektrisch und/oder magnetisch gut leitendem Material, z.B. aus Aluminium, Ferrit oder Stahl. Der zweiten Sensorspule 34 steht ein entsprechendes Markierungsteil 38 gegenüber, das am Sensorgehäuse 35 befestigt ist. Im Ausführungsbeispiel besteht das Markierungsteil 38 aus dem gleichen Material wie das Markierungsteil 37. Die Begrenzungsflächen von Sensorspulen und Markierungsteilen weisen nur einen geringen axialen Abstand voneinander auf. Die Sensorspulen 33, 34 werden von einem hochfrequenten Wechselstrom durchflossen, der vom Regelverstärker 9 (vgl. Fig. 1) geliefert wird und zur Ermittlung der Spulenimpedanzen bei der gegebenen Wechselstromfrequenz dient. Die Impedanzen der Sensorspulen 33, 34 sind dann annähernd gleich, wenn ihre Abstände zu den Begrenzungsflächen der Markierungsteile 37, 38 annähernd gleich sind. Das im Regelverstärker 9 gewonnene elektrische Signal ist in diesem Falle annähernd gleich Null. Bei axialer Rotorabweichung ist das Signal hinsichtlich seines Vorzeichens und Betrages der Richtung und dem Betrag der Abweichung des Rotors aus der neutralen Rotorposition eindeutig zugeordnet.

Das der axialen Rotorposition näherungsweise proportionale Signal des Regelverstärkers 9 wird mit einer Phasenvoreilung ausgestattet. Aufgrund dieser Phasenvoreilung wird außer der gewünschten Rückstellkraft gleichzeitig auch eine Dämpfkraft in axialer Richtung auf den Rotor übertragen, so daß insbesondere stoßartige Belastungen des Magnetlagers nicht zu axialen Rotorvibrationen führen.

Die erfindungsgemäße Lagerung ist somit in allen Achsen stabil und gedämpft, wobei lediglich in Richtung der Rotorachse 31 des Rotors mit elektromagnetischen Ablenkmitteln gearbeitet wird, im übrigen jedoch nur Permanentmagnete wirken.

Fig. 6 zeigt das Schnittbild eines Antriebsmotors 39 für den Antrieb des Rotors. Als Läufer des Antriebsmotors ist an der Welle 2 des Rotors 1 ein Rotorteil 40 befestigt, das zu wesentlichen Teilen aus permanentmagnetischem Material mit radialer Magnetisierung besteht. Das Rotorteil 40 ist berührungslos vom Motorstator 41 umgeben, der eine Drehstromwicklung 41′ aufweist und aus einem Mehrphasen-Drehstromgenerator bzw. Drehstromwandler 42 gespeist wird. Der Antriebsmotor 39 kann an irgendeiner freien Stelle der Welle 2 angesetzt werden, insbesondere ist er zwischen dem Schwerpunktlager 5 und dem Stabilisierungslager 7 angeordnet.

Fig. 7 zeigt ein an der Welle 2 des Rotors angeordnetes Anlauflager 43. Das Anlauflager weist zwei an der Welle 2 befestigte Schulter- bzw. Spindellager 44, 45 auf, die gegeneinandergestellt sind. Die Schulter- bzw. Spindellager wirken axial zusammen mit einer am Lagergehäuse 6 befestigten Kapsel 46, die aus mehreren Teilen aufgebaut sein muß, damit die Lager im zusammengebauten Zustand des Anlauflagers von der Kapsel derart umschließbar sind, daß die äußeren Stirnflächen der Lager sich gegen Anlagenflächen 47 der Kapsel 46 abstützen können, wenn der Rotor 1 in axialer Richtung soweit ausgelenkt wird, daß eine zulässige berührungslose Maximalabweichung überschritten wird. In einem solchen Falle, insbesondere bei Ausfall der axialen Stabilisierungsfunktion des Stabilisierungslagers 7 übernimmt das Anlauflager dann die Aufgabe der axialen Abstützung des Rotors. Die Anlagenflächen 47 verhindern eine weitere Auslenkung des Rotors 1.

Beim Schwerpunktlager sind in den Ausführungsbeispielen die Rotormagnetringe zwischen Statormagnetringen angeordnet. Diese Zuordnung von Rotor- und Statormagnetringen kann auch in anderer Weise gestaltet sein, wenn nur die magnetische Hintereinanderanordnung der magnetischen Zonen der Magnetringe und Scheiben beibehalten wird. Variierbar ist bei der magnetischen Lagerung der Erfindung selbstverständlich auch Stator- und Rotorteil. So ist es ohne Änderung der Lagerwirkung möglich, die Statorteile der magnetischen Lagerung auf einer feststehenden Achse zu montieren und die Rotorteile auf einer die Achse umschließenden Hohlwelle zu befestigen, die dann das die Achse umlaufende Maschinenteil trägt.

Bei Einsatz der magnetischen Lagerung für Maschinenaggregate, bei denen korrosive Medien mit der Magnetlagerung in Berührung kommen, werden die Magnetringe neben den bereits beschriebenen Schutzringen, die aufschrumpfbar sind, auch auf ihren Stirnflächen geschützt. Hierzu eignen sich auf der Stirnseite der Magnetringe beispielsweise aufgeklebte Schutzbleche aus nichtmagnetisierbarem Material, beispielsweise aus Edelstählen. Möglich ist statt der Schutzbleche auch eine Beschichtung der Magnetringe durch galvanisches Auftragen von Schutzschichten aus flüssiger Phase.

Zur radialen Begrenzung der Bewegungsfreiheit der Welle 2 ist in Figur 4 eine Anlaufbuchse 48 gezeigt, die am Schwerpunktlagergehäuse 12 befestigt ist. Die Anlaufbuchse 48 besteht vorzugsweise aus einem Kunststoff mit guter Gleiteigenschaft, z.B. aus PTFE oder Polyimid mit eingelagerten Gleitstoffen.

## Patentansprüche

1. Magnetische Lagerung für einen Rotor, mit Lagern unter Verwendung von Permanentmagneten, von denen ein erstes permanentmagnetisches Lager mit vergleichsweise hoher Steifigkeit, im folgenden als Schwerpunktlager (5) bezeichnet, den größten Teil des Rotorgewichtes trägt und zur Aufnahme der radialen Lagerkräfte vorgesehen ist, wobei sich der Schwerpunkt (4) des Rotors (1) innerhalb des Schwerpunktlagers (5) befindet, und ein zweites permanentmagnetisches Lager mit vergleichsweise geringer Steifigkeit als Stabilisierungslager (7) dient, das den Rotor (1) in einer berührungslosen Lage gegenüber einem Stator (6) hält, wobei das Stabilisierungslager für die axiale Stabilisierung des Rotors (1) am Stator angebrachte elektrische Spulen (26a, 26b) aufweist, die mit am Rotor (1) befestigten magnetisierbaren Teilen zusammenwirken, und eine Wirbelstromdämpfung zur Dämpfung von Radialbewegungen des Rotors (1) gegenüber dem Stator (6) vorgesehen ist.

2. Magnetische Lagerung nach Anspruch 1,
**dadurch gekennzeichnet,**
daß das Schwerpunktlager (5) aus einem koaxial zur Rotorachse angeordneten Satz von Magnetringen (10, 11) aus hartmagnetischem Material mit gleichgerichteter axialer Magnetisierung besteht, wobei in axialer Richtung abwechselnd Rotor- und Statormagnetringe angeordnet sind, und sich die im wesentlichen ebenen Stirnflächen von Rotor- und Statormagnetringen in engem axialen Abstand gegenüberstehen.

3. Magnetische Lagerung nach Anspruch 1 oder 2,
**dadurch gekennzeichnet,**
daß neben dem ersten Satz von Rotor- und Statormagnetringen (16a, 16b, 17a, 17b, 17c) mindestens ein weiterer Satz von Magnetringen (18a, 18b, 19a, 19b, 19c) mit dem ersten Satz entgegengesetzter axialer Magnetisierung angeordnet ist, wobei Stirnflächen der Rotor- bzw. Statormagnetringe (16a, 16b, 17a, 17b, 17c) des einen Satzes mit Stirnflächen der Rotor- bzw. Statormagnetringe (18a, 18b, 19a, 19b, 19c) des anderen Satzes in einer Ebene liegen.

4. Magnetische Lagerung nach Anspruch 3,
**dadurch gekennzeichnet,**
daß als Magnetringe Scheiben (20a, 20b, 21a, 21b) aus hartmagnetischem Material mit mindestens zwei konzentrischen, ringförmigen Zonen entgegengesetzter axialer Magnetisierung eingesetzt sind.

5. Magnetische Lagerung nach einem der Ansprüche 2, 3 oder 4,
**dadurch gekennzeichnet,**
daß die Magnetringe eine das Material vor aggressiven Medien schützende Beschichtung aufweisen.

6. Magnetische Lagerung nach Anspruch 5,
**dadurch gekennzeichnet,**
daß die Beschichtung aus auf den Magnetringen befestigten Schutzringen und/oder Schutzblechen besteht.

7. Magnetische Lagerung nach Anspruch 5,
**dadurch gekennzeichnet,**
daß die Beschichtung der Magnetringe durch Abscheiden aus einer flüssigen Phase gewonnen ist.

8. Magnetische Lagerung nach einem der Ansprüche 5, 6 oder 7,
**dadurch gekennzeichnet,**
daß die Beschichtung aus einem Material hoher Zugfestigkeit besteht.

9. Magnetische Lagerung nach einem der vorhergehenden Ansprüche,
**dadurch gekennzeichnet,**
daß das Schwerpunktlager (5) eine Anlaufbuchse zur mechanischen Begrenzung des radialen Lagerspiels aufweist.

10. Magnetische Lagerung nach Anspruch 9,
**dadurch gekennzeichnet,**
daß die Anlaufbuchse mit einem temperaturbeständigen Kunststoff mit guten Gleiteigenschaften, vorzugsweise PTFE (Polytetrafluoräthylen) oder Polyimid mit eingelagertem Gleitstoff, ausgekleidet ist.

11. Magnetische Lagerung nach einem der vorhergehenden Ansprüche,
**dadurch gekennzeichnet,**
daß für die Abtastung der axialen Rotorposition ein Sensor (8) eingesetzt ist, der im wesentlichen aus zwei Sensorspulen (33, 34) annähernd gleicher Impedanz besteht, von denen die eine Spule (33) einem vorzugsweise an einem der axialen Wellenenden (36) angebrachten Markierungsteil (37) aus einem Material mit hoher elektrischer und/oder magnetischer Leitfähigkeit in engem axialem Abstand gegenübersteht, wobei gegenüberstehende Begrenzungsflächen von Spule (33) und Markierungsteil (37) im wesentlichen eben und senkrecht in Bezug auf die Rotorachse (31) orientiert sind, während die zweite Spule (34) einem am Sensorgehäuse (35) angebrachten Markierungsteil (38) aus einem Material gegenübersteht, dessen elektrische und magnetische Eigenschaften denen des am Rotor (1) angebrachten Markierungsteils (37) weitgehend entsprechen.

12. Magnetische Lagerung nach einem der vorhergehenden Ansprüche,
**gekennzeichnet durch**
die Anordnung eines Antriebsmotors (39) für den Rotor (1) mit einem Läufer (40) aus in radialer Richtung magnetisiertem permanentmagnetischen Material.

13. Magnetische Lagerung nach Anspruch 12,
**dadurch gekennzeichnet,**
daß der Antreibsmotor (39) einen Motorstator (41) mit bei Drehstrommotoren üblicher Bewicklung aufweist, der aus einem Mehrphasen-Drehstromgenerator bzw. Drehstromwandler (42) gespeist wird.

14. Magnetische Lagerung nach einem der vorhergehenden Ansprüche,
**dadurch gekennzeichnet,**
daß am Rotor ein axial wirkendes Anlauflager (43) angebracht ist, das zwei auf der Welle (2) des Rotors (1) befestigte Schulter- bzw. Spindelkugellager (44, 45) aufweist, die beide gegeneinandergestellt sind, sowie aus einer mit dem Lagergehäuse (6) verbundenen Kapsel (46) besteht.

15. Magnetische Lagerung nach einem der vorhergehenden Ansprüche,
**gekennzeichnet durch**
dessen Verwendung zur Lagerung eines Rotors, der eine Schwungscheibe (3) aus hochfestem Material, insbesondere aus für hohe Drehgeschwindigkeiten ausgelegtem Faserverbundmaterial trägt.

16. Magnetische Lagerung nach einem der vorhergehenden Ansprüche,
**gekennzeichnet durch**
dessen Verwendung zur Rotorlagerung von axial und/oder radial verdichtenden Gasturbinen, insbesondere von Turbomolekularpumpen.

17. Magnetische Lagerung nach einem der vorhergehenden Ansprüche,
**gekennzeichnet durch**
dessen Verwendung zur Rotorlagerung einer Spinnturbine.

## Claims

1. Magnetic bearing assembly for a rotor, with bearings using permanent magnets, whereof a first permanent-magnetic bearing of relatively high rigidity, referred to hereinafter as the centre-of-gravity bearing (5), bears the greatest proportion of the rotor weight and is arranged to take up the radial bearing forces, the centre of gravity (4) of the rotor (1) being situated within the centre-of-gravity bearing (5), and a second permanent-magnetic bearing of relatively low rigidity serves as stabilisation bearing (7) which holds the rotor in a position without physical contact relatively to the stator (6), the stabilisation bearing comprising for the axial stabilisation of the rotor (1) electrical coils (26a, 26b) which are arranged on the stator and which co-operate with magnetisable elements secured on the rotor (1), and eddy-current damping is provided for the damping of radial movements of the rotor (1) relatively to the stator (6).

2. Magnetic bearing assembly according to claim 1, characterised in that the centre-of-gravity bearing (5) comprises a set, arranged coaxially with the rotor axis, of magnet rings (10, 11) made of hard magnetic material with unidirectional axial magnetisation, rotor and stator magnet rings being arranged alternately in the axial direction, and the substantially plane end faces of rotor and stator magnet rings being situated opposite one another with short axial spacing.

3. Magnetic bearing assembly according to claim 1 or 2, characterised in that adjacent the first set of rotor and stator magnet rings (16a, 16b, 17a, 17b, 17c) at least one further set of magnet rings (18a, 18b, 19a, 19b, 19c) is arranged with axial magnetisation opposite to the first set, and faces of the rotor and stator magnet rings (16a, 16b, 17a, 17b, 17c) of the one set are situated in one and the same plane as faces of the rotor and stator magnet rings (18a, 18b, 19a, 19b, 19c) of the other set.

4. Magnetic bearing assembly according to claim 3, characterised in that discs (20a, 20b. 21a, 21b) made of hard magnetic material with at least two concentric annular zones of opposite axial magnetisation are used as the magnet rings.

5. Magnetic bearing assembly according to one of claims 2, 3 or 4, characterised in that the magnet rings have a covering layer protecting the material from corrosive media.

6. Magnetic bearing assembly according to claim 5, characterised in that the covering layer consists of protective rings and/or protective plates secured on the magnet rings.

7. Magnetic bearing assembly according to claim 5, characterised in that the covering layer on the magnet rings is obtained by deposition from a liquid phase.

8. Magnetic bearing assembly according to one of claims 5, 6 or 7, characterised in that the covering layer consists of a material of high tensile strength.

9. Magnetic bearing assembly according to one of the preceding claims, characterised in that the centre-of-gravity bearing (5) has an abutment sleeve for the mechanical delimitation of the radial bearing play.

10. Magnetic bearing assembly according to claim 9, characterised in that the abutment sleeve is lined with a synthetic plastic material with good temperature stability and with good sliding properties, preferably PTFE (polytetrafluoro ethylene) or polyimide with incorporated lubricant.

11. Magnetic bearing assembly according to one of the preceding claims, characterised in that for scanning the axial rotor position a sensor (8) is used which consists substantially of two sensor coils (33, 34) of approximately like impedance, whereof one coil (33) is situated opposite, with close axial spacing, a marking element (37) made of a material with high electrical and/or magnetic conductivity and arranged on one of the axial shaft ends (36), opposite boundary surfaces of the coil (33) and the marking element (37) being substantially plane and at right angles to the rotor axis (31) in orientation, whereas the second coil (34) is situated opposite a marking element (38) which is arranged on the sensor housing (35) and which is made of a material whose electrical and magnetic properties correspond substantially to those of the marking element (37) arranged on the rotor (1).

12. Magnetic bearing assembly according to one of the preceding claims, characterised by the arrangement of a drive motor (39) for the rotor (1), with a motor rotor (40) made of permanent-magnetic material magnetised in the radial direction.

13. Magnetic bearing assembly according to claim 12, characterised in that the drive motor (39) has a motor stator (41) with the winding customary in three-phase motors, which stator is supplied from a polyphase three-phase generator or three-phase converter (42).

14. Magnetic bearing assembly according to one of the preceding claims, characterised in that on the rotor there is arranged an axially acting abutment bearing (43) which comprises two shoulder or spindle type ball bearings (44, 45) which are secured on the shaft (2) of the rotor (1) and positioned opposite to one another, also a case (46) connected to the bearing housing (6).

15. Magnetic bearing assembly according to one of the preceding claims, characterised by the use thereof for supporting a rotor which supports a flywheel (3) of high-strength material, especially fibre composite material designed for high rotational speeds.

16. Magnetic bearing assembly according to one of the preceding claims, characterised by the use thereof for rotor support in gas turbines of axially and/or radially compressing types, especially in turbomolecular pumps.

17. Magnetic bearing assembly according to one of the preceding claims, characterised by the use thereof for rotor support in a spinning turbine.

## Revendications

1. Support magnétique pour un rotor, avec des paliers utilisant des aimants permanents, dont un premier palier à aimantation permanente de rigidité relativement élevée, appelé ci-après palier de centre de gravité (5), porte la majeure partie du poids du rotor et est prévu pour recevoir des forces de palier radiales, le centre de gravité (4) du rotor (1) se trouvant à l'intérieur du palier de centre de gravité (5), et un second palier à aimantation permanente de rigidité relativement faible servant de palier de stabilisation (7), qui maintient le rotor (1) dans une position sans contact par rapport à un stator (6), le palier de stabilisation présentant, pour la stabilisation axiale du rotor (1), des bobines électriques (26a, 26b) qui sont montées sur le stator et coopèrent avec des éléments magnétisables fixés sur le rotor (1), et un amortissement par courant de Foucault étant prévu pour amortir les mouvements radiaux du rotor (1) par rapport au stator (6).

2. Support magnétique selon la revendication 1, **caractérisé** en ce que le palier de centre de gravité (5) est constitué d'un jeu, disposé coaxialement à l'axe du rotor, de bagues magnétiques (10, 11) en alliage magnétique dur à aimantation axiale dans le même sens, des bagues magnétiques de rotor et de stator étant alternativement disposées en direction axiale, et les faces frontales essentiellement planes des bagues magnétiques de rotor et de stator se faisant face à étroite distance axiale.

3. Support magnétique selon la revendication 1 ou 2, **caractérisé** en ce qu'au moins un autre jeu de bagues magnétiques (18a, 18b, 19a, 19b, 19c), à aimantation axiale en sens opposé au premier jeu, est disposé à côté du premier jeu de bagues magnétiques de rotor et de stator (16a, 16b, 17a, 17b, 17c), des faces frontales des bagues magnétiques de rotor ou de stator (16a, 16b, 17a, 17b, 17c) du premier jeu se trouvant dans un plan avec des faces frontales des bagues magnétiques de rotor ou de stator (18a, 18b, 19a, 19b, 19c) de l'autre jeu.

4. Support magnétique selon la revendication 3, **caractérisé** en ce qu'on utilise comme bagues magnétiques des disques (20a, 20b, 20c) en alliage magnétique dur, avec au moins deux zones annulaires concentriques à aimantation axiale en sens opposés.

5. Support magnétique selon l'une quelconque des revendications 2 à 4, **caractérisé** en ce que les bagues magnétiques présentent un revêtement protégeant le matériau des milieux agressifs.

6. Support magnétique selon la revendication 5, **caractérisé** en ce que le revêtement est constitué de bagues de protection et/ou de tôles de protection fixées sur les bagues magnétiques.

7. Support magnétique selon la revendication 5, **caractérisé** en ce que le revêtement des bagues magnétiques est obtenu par séparation à partir d'une phase liquide.

8. Support magnétique selon l'une quelconque des revendications 5 à 7, **caractérisé** en ce que le revêtement est constitué d'un matériau à haute résistance à la traction.

9. Support magnétique selon l'une quelconque des revendications précédentes, **caractérisé** en ce que le palier de centre de gravité (5) présente un coussinet d'arrêt pour la limitation mécanique du jeu de palier radial.

10. Support magnétique selon la revendication 9, **caractérisé** en ce que le coussinet d'arrêt est habillé d'une matière plastique résistante à la température et présentant de bonnes propriétés de glissement, de préférence du PTFE (polytétrafluoréthylène) ou du polyimide incorporant un agent de glissement.

11. Support magnétique selon l'une quelconque des revendications précédentes, **caractérisé** en ce qu'un capteur (8) est installé pour balayer la position axiale du rotor, et est constitué pour l'essentiel de deux bobirtes de capteur (33, 34) d'impédance approximativement identique, dont l'une (33) fait face, à étroite distance axiale, à un élément de marquage (37) disposé de préférence à une (36) des extrémités d'arbre axiales et constitué d'un matériau à haute conductibilité électrique et/ou magnétique, les faces frontales en vis-à-vis de la bobine (33) et de l'élément de marquage (37) étant sensiblement planes et orientées perpendiculairement à l'axe (31) du rotor, tandis que la seconde bobine (34) fait face à un élément de marquage (38), disposé sur le boîtier de capteur (35) et constitué d'un matériau dont les propriétés électriques et magnétiques sont sensiblement identiques à celles de l'élément de marquage (37) disposé sur le rotor (1).

12. Support magnétique selon l'une quelconque des revendications précédentes, **caractérisé** par la disposition d'un moteur d'entraînement (39) pour le rotor (1), avec un induit (40) en alliage à aimantation permanente, aimanté en direction radiale.

13. Support magnétique selon la revendication 12, **caractérisé** en ce que le moteur d'entraînement (39) comprend un stator de moteur (41), qui présente un enroulement habituel pour des moteurs triphasés et est alimenté par un générateur ou transformateur de courant triphasé (42).

14. Support magnétique selon l'une quelconque des revendications précédentes, **caractérisé** en ce qu'un palier d'arrêt (43) à action axiale est disposé sur le rotor, présente deux roulements à billes et à broche ou épaulement (44, 45), fixés sur l'arbre (2) du rotor (1) en étant placés l'un contre l'autre, et est également constitué d'une enveloppe (46) assemblée au corps de palier (6).

15. Support magnétique selon l'une quelconque des revendications précédentes, **caractérisé** par son utilisation pour le montage d'un rotor portant un volant d'inertie (3) en matériau à haute résistance, notamment en matériau composite renforcé par des fibres, conçu pour des vitesses de rotation élevées.

16. Support magnétique selon l'une quelconque des revendications précédentes, **caractérisé** par son utilisation pour le montage du rotor de turbines à gaz à compression axiale et/ou radiale, notamment de pompes turbomoléculaires.

17. Support magnétique selon l'une quelconque des revendications précédentes, **caractérisé** par son utilisation pour le montage du rotor d'une turbine de filage.
